# EUROPEAN PATENT SPECIFICATION

(11) **EP 0 756 844 B1**
(45) Date of publication and mention of the grant of the patent: **06.05.1999**
(21) Application number: 96305383.0
(22) Date of filing: 23.07.1996
(51) Int. Cl.: A47J 31/40, B65D 81/00

(54) **Cappuccino brewing method**
Cappuccino Brühverfahren
Méthode pour préparer du cappuccino

(30) Priority: 02.08.1995 US 510368
(43) Date of publication of application: 05.02.1997
(73) Proprietor: Kraft Jacobs Suchard SA, 8034 Zürich (CH)
(72) Inventor: Gotham, Simon Martyn, 81737 München (DE); Laudano, Raymond Jay, New Fairfield, Connecticut 06812 (US); Hinman, David Christopher, North Tarrytown, New York 10591 (US)
(74) Representative: Eyles, Christopher Thomas

(56) References cited:
- LU-A- 68 816
- US-A- 2 968 560
- US-A- 3 607 297

## Description

### FIELD OF THE INVENTION

The present invention relates to a method for brewing cappuccino using an espresso machine.

### BACKGROUND OF THE INVENTION

U.S. Patent Number 2968560 discloses a method of making coffee comprising separating ground coffee from a dehydrated dairy product by a porous separator and flowing hot water first through the coffee and then through the dairy product, which is completely dissolved and dispersed in the resulting liquid coffee.

A variety of apparatus exist for brewing espresso and cappuccino. For example U.S. Patent Numbers 4,644,856 and 4,852,874 show one type of espresso machine having a cappuccino making attachment. With such apparatus a cup of espresso can be made by inserting comminuted coffee beans into the apparatus and then brewing the espresso with the steam from the apparatus.

Alternatively, cappuccino can be brewed with this apparatus by first brewing a cup of espresso, preparing a separate cup of milk, foaming the milk using the steam nozzle provided for that purpose, and then adding the foamed milk to the espresso. The brewing of the cappuccino using such machines requires several steps beyond the comparatively simple espresso brewing process.

Other, more sophisticated devices are available such as shown in U.S. Patent No. 5,372,061 which includes a heater for the dispensing unit which holds the coffee filter and an apparatus for replenishing the steam tank for the cappuccino steam dispenser. Again, even with such sophisticated machines, the brewing of a cup of cappuccino requires several additional steps beyond the brewing of a cup of espresso.

In addition to the foregoing standard types of espresso machines, cappuccino accessories adapted for the end of a steam outlet pipe from an espresso machine are also available. An example of such a cappuccino accessory is shown in U.S. Patent No. 5,295,431. This accessory is designed to produce Italian cappuccino and has for its purpose the provision of a creamy air-milk-steam emulsion which is required for the preparation of Italian cappuccino.

Another device for preparing milk froth for cappuccino is shown in U.S. Patent No. 5,335,588. This device is also an accessory for coffee and espresso makers equipped with a super heated steam generator and a steam pipe. This patent points out that generating froth for cappuccino using the standard steam outlet requires practice and sensitivity on the part of the user, since in order to continually produce milk froth, the steam nozzle must always be held in an optimum position relative to the milk surface. As a result, devices for simplifying the preparation of milk froth for home espresso machines have been developed.

Other espresso machines such as that shown in U.S. Patent No. 5,337,652 brew espresso and/or cappuccino within the apparatus using steam generation or brew coffee externally by, for example, discharging hot water into a soluble coffee. The device also includes a steam pipe for external foaming in order to prepare foamed milk for cappuccino in the usual manner. Finally this apparatus includes the additional feature of providing a special valve connected to the steam discharge pipe in order to wash the ground coffee out in an abrupt way at the end of the brewing operation and provide a very thick head or cream on the surface of the espresso.

It is apparent from the foregoing publications that the brewing of cappuccino using an espresso machine requires the additional steps of preparing a separate cup of milk, foaming the milk and then adding the milk to the brewed cup of espresso to thereby obtain a cup of cappuccino. It is desirable to simplify this process in order to encourage use of espresso machines for the brewing of cappuccino.

Accordingly, it is an object of the present invention to provide a simplified method for brewing cappuccino using existing espresso machines.

It is a further object of the present invention to provide a consistent cup of cappuccino from each brewing experience.

These and other objects of the present invention will be apparent from the summary and detailed description of the invention which follow.

### SUMMARY OF THE INVENTION

The present invention relates to a method for brewing a cup of cappuccino employing conventional espresso apparatus in a new manner. The method involves inserting a coffee filter pack and a creamer filter pack into the brewing chamber of an espresso machine with the coffee filter pack placed above the creamer filter pack. Then the brewing cycle for espresso is employed to thereby generate a cup of cappuccino from the two filter packs.

Thus, according to the present invention there is provided a method as claimed in claim 1.

In one embodiment a creamer filter pack is used in espresso machines in combination with an espresso filter pack in order to brew a cup of cappuccino by employing the espresso brewing cycle.

In a further embodiment, a cappuccino brewing kit which comprises a first coffee filter pack and a second creamer filter pack which are associated with one another is used in an espresso machine to brew a cup of cappuccino by employing the espresso brewing cycle. The creamer and coffee contained in the kit are separated by at least a layer of filter material and are proportioned to provide the desired amounts of creamer and coffee for a cup of cappuccino.

The present invention provides a simplified method for producing cappuccino using conventional espresso machines thereby saving the additional steps of providing a separate cup of milk, foaming the milk and adding the milk to the espresso as well as savings in cleaning the apparatus. Further, cost savings can be realized since the present invention does not require a cappuccino foaming accessory.

### BRIEF DESCRIPTION OF THE DRAWINGS

Figure 1 is a cross sectional view of an embodiment of the present invention employing two physically separate filter packs.
Figure 2 is a cross sectional view of another embodiment of the present invention wherein the two filter packs are attached to one another.
Figure 3 depicts yet another embodiment of the present invention wherein the cappuccino brewing kit is formed as a unitary filter pack.

### DETAILED DESCRIPTION OF THE PREFERRED EMBODIMENTS

Referring now to the figures like elements are indicated by the like numbers throughout the several views.

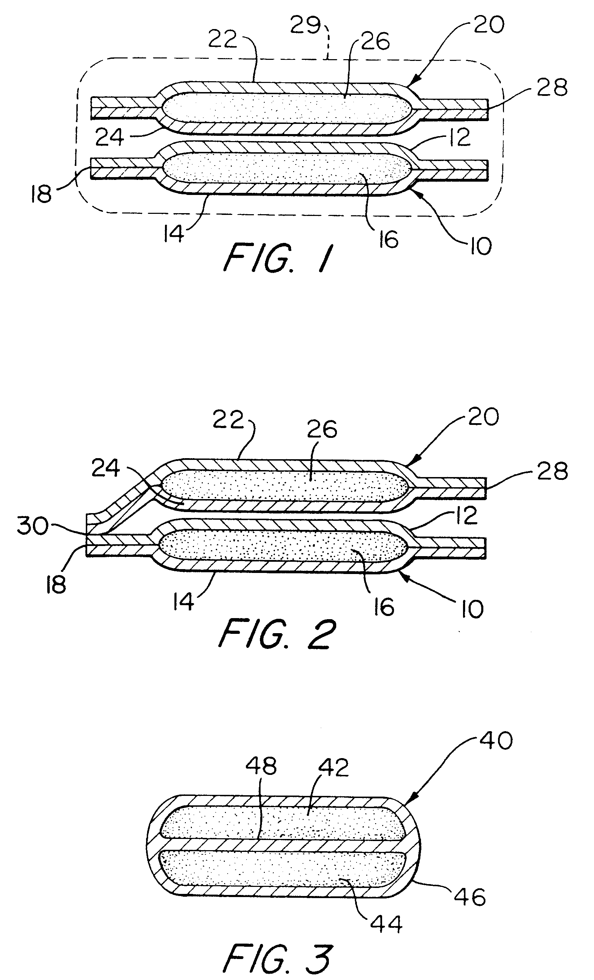

In its broadest sense, the present invention relates to a creamer filter pouch (10) such as that shown in figure 1 which in combination with a coffee pouch (20) such as that shown in figure 1 comprise a cappuccino brewing kit. The pouches as shown are generally circular but any suitable shape could be utilized as long as it would fit into the brewing chamber of an espresso machine. Creamer filter pouch (10) includes a top layer (12) of filter material as well as a bottom layer (14) of filter material. The top and bottom layers, (12, 14) of filter material are sealed together by any conventional means such as heat sealing, for example, to form a seal (18) between the top and bottom layers (12, 14) around the periphery of creamer filter pouch (10). In this manner a pouch for creamer (16) is formed.

The filter material utilized for the creamer filter pouch may be any food compatible material that allows delivery of the creamer into the coffee brew and the material may be the same or different than the material utilized to manufacture the coffee filter pouch. The filter material employed for the creamer filter pouch may be any conventional, suitable filter paper and is typically the same type of filter paper as is used for commercially available filter pouches of espresso. The filter paper should have a sufficient pore size to permit entry of water or steam into the creamer filter pouch (10) as well as allow passage of an aqueous solution of creamer (16) out of creamer filter pouch (10). The filter material may also include spun bonded polypropylene, polyester material or the like.

The creamer (16) employed in creamer filter pouch (10) may be any conventional water-soluble creamer including dairy creamers, as well as the so called whiteners or non-dairy creamers. Commercially available foaming creamers may also be employed in creamer filter pouch (10). Examples of foaming creamer include those products disclosed in the following patents: U.S. Patents Nos. 4,438,147, 4,746,527, 4,748,040 and EPO Patent 458,310.

Preferred creamer (16) will possess a density within the range of 0.35 to 0.60g./cc. It is preferred to utilize a high density creamer (as well as higher density optional ingredients) to minimize the volume of the creamer pouch thereby creating some void volume in the brewing chamber to allow for the production of foam. The creamer alone or in combination with the optional ingredients may also be compacted prior to being packaged into the pouch.

Creamer filter pouch (10) may further include other desirable optional ingredients for the cappuccino such as sweeteners. Any water-soluble sweeteners, including natural sweeteners, artificial sweeteners and mixtures thereof may be employed with creamer (16) in creamer filter pouch (10). Typically the amount of sweetener will be determined by concerns of taste.

Additionally, creamer filter pouch (10) may include other ingredients such as foam stabilizers as well as standard additives for commercially available creamers. Flavors including but not limited to cocoa, chocolate, vanilla, mint, hazelnut, etc may be added to the creamer filter pouch.

Creamer filter pouch (10) of the present invention is adapted for use in combination with commercially available espresso filter pouches in conventional electric espresso machines. By employing creamer filter pouch (10) in combination with a conventional espresso filter pouch, as described below, a cup of cappuccino may be obtained in a simple and efficient manner using an espresso machine without having to employ the milk foaming apparatus generally included with such machines.

The cappuccino brewing kit comprises a combination of a creamer filter pouch (10), as described above, with a coffee filter pouch (20). Creamer filter pouch (10) and coffee filter pouch (20) may be completely separate from one another or, in a more preferred embodiment, may be loosely associated with one another by, for example, a porous bag (29) as shown in figure 1.

Porous bag (29) may be formed from any suitable material such as a loose mesh material, filter paper or other porous media including non-paper and synthetic compositions. Porous bag (29) should not interfere in any way with the flow of water and/or steam through creamer filter pouch (10) and coffee filter pouch (20) and should allow the positioning of coffee filter pouch (20) above creamer filter pouch (10) when porous bag (29) is inserted into the brewing chamber of an espresso machine. The advantage of employing porous bag (29) is that the cappuccino brewing kit, including creamer filter pouch (10) and coffee filter pouch (20) are retained in association with one another to thereby further simplify the cappuccino brewing process.

Coffee filter pouch (20) is formed from a top layer (22) of filter material and a bottom layer (24) of filter material which are sealed at seal (28) around the periphery. Coffee filter pouch (20) comprises roast and ground coffee (26) having extractable flavor solids therein.

Coffee filter pouch (20) may include any commercially available varieties of roast and ground coffee with a preference of roast and ground coffees which are typically employed for brewing espresso. A typical espresso grind size may be utilized such as the following:

| Sieve size (microns) | % Passing Through Sieve |
|---|---|
| 1000 | 99-100 |
| 500 | 96-99 |
| 250 | 50-65 |
| 100 | 20-30 |

Coffee filter pouch (20) may additionally include a proportion of soluble coffee in addition to roast and ground coffee. However, the soluble coffee should be carefully selected both as to the type and quantity to avoid blockage of the coffee filter pouch (20) during brewing. The coffee, either roast and ground coffee or roast and ground plus soluble coffee may be compacted prior to being packaged into the pouch.

An important aspect of the cappuccino brewing kit of the present invention is that it maintains a separation between the roast and ground coffee (26) and creamer (16). This separation ensures that the creamer can wet and dissolve without blocking the passage of water through the brewing kit which occurs when the espresso coffee and creamer are combined in one pouch. Further, the separation also avoids the problem of adsorption of the creamer onto the coffee grounds during brewing which could result in a blockage of the water and/or steam flow through the cappuccino brewing kit and/or espresso brewing chamber.

The relative amounts of creamer (16) and coffee (26) contained in creamer filter pouch (10) and coffee filter pouch (20) respectively are selected to provide the desired blend of creamer and coffee in the cappuccino product. Thus, the relative amounts of the two components may vary based on the extraction yield of the coffee, the solubility of the creamer and the quantity of soluble coffee employed in coffee filter pouch (20). Generally the weight ratio of the creamer contents of creamer pouch (10) to the amount of roast and ground coffee (26) contained in coffee filter pouch (20) will be from 0.2 - 5.0; the optional ingredients, sweeteners, flavors and foam stabilizers are not included in the weight of the creamer pouch to determine these ratios and the roast and ground coffee should be expressed on a dry weight. More preferably, the weight ratio of creamer content of the creamer pouch (10) to coffee (26) will be in the range of 0.4 - 2.0 for embodiments which employ only roast and ground coffee. For embodiments employing soluble coffee, the ratio of the water soluble contents of creamer pouch (10) to coffee (26) (measured as the weight of extractable solids from the roast and ground coffee plus the weight of soluble coffee) may be higher and is preferably in the range of 1.0 - 7.5.

Referring now to figure 2 there is shown another embodiment of the present invention wherein creamer filter pouch (10) is attached to coffee filter pouch (20) by a heat seal (30). The embodiment shown utilizes a heat seal on one outer edge of the two circular filter pouches; however it would be preferred to have two or more heat seal points to better secure the pouches together. Any suitable attachment means such as a staple or other type of fastener may also be employed. Creamer filter pouch (10) should be attached to coffee filter pouch (20) in such a manner that coffee filter pouch (20) can be positioned above creamer filter pouch (10) in the brewing chamber of an espresso machine.

Yet another embodiment of the present invention is depicted in figure 3. In figure 3 is shown a unitary cappuccino brewing kit (40) formed from an outer wall (46) and an intermediate layer (48) which may be attached to one another in any suitable manner such as by heat sealing. Outer wall (46) and inner layer (48) define a coffee pouch (42) and creamer pouch (44) which contain, respectively, coffee and creamer as discussed with respect to the previous embodiments.

The present invention encompasses a method for brewing cappuccino using an electric espresso brewer with an internal pressurising pump. In the method a cappuccino brewing kit comprising a coffee filter pouch (20) and a second creamer filter pouch (10) are inserted into the brewing chamber of a conventional espresso machine. Then, the brewing cycle of the espresso machine is actuated in the usual manner to thereby contact the cappuccino brewing kit with hot water and/or steam to thereby brew cappuccino. In order to obtain the desired volume of beverage from the espresso machine, however, it may be necessary to either run sufficient water/steam through the machine to produce sufficient volume of cappuccino to fill a coffee cup or run the espresso machine through two or three brewing cycles since the amount of water provided for a standard cup of espresso is significantly less than the amount of water required for a standard cup of cappuccino.

In the method it is important to position the coffee filter pouch (20) above the creamer filter pouch (10) since otherwise the coffee grounds can adsorb creamer solution and cause blockage of the brewing chamber. Further, foam generation in the cappuccino is enhanced by the presence of a void volume in the espresso brewing chamber. Thus, the cappuccino brewing kit should be designed in a manner which provides some void volume when it is inserted into the espresso brewing chamber to thereby enhance foam generation.

The present invention will be further illustrated with the following examples.

### EXAMPLES

### Example 1

The cappuccino brewing kit consists of one pouch containing 6.0g roast & ground espresso coffee and a second pouch containing 7.25g commercially available dairy creamer and 0.15g spray dried aspartame sweetener. The filter paper is heat seal filter paper 16.5g/m2 density. The filter bags were hand made, heat sealed and are circular (5.0. cm diameter). The two bags (coffee bag uppermost) are placed in an Espresso brewer (Co-op Satrap-Espresso Midibar, made by Co-op Switzerland) and brewed as per equipment instructions. The product (150ml volume) is a cappuccino with an off-white foam which is stable for 2 minutes.

### Example 2

As per Example 1 but the coffee bag contains 5.0g of roast and ground espresso coffee and 1.50g of agglomerated instant coffee. The instant coffee when combined with roast and ground coffee did not block the filter paper. The product had the same characteristics as the product of Example 1. The instant coffee was added to improve the coffee impact in the final brew.

### Example 3

The product unit consists of one pouch containing 6.25g roast and ground espresso coffee. In this example a foaming creamer manufactured according to the teaching of EP 458,310 was used as the creamer. This low density creamer was ground in a pestle and mortar and sieved through a 25 micron sieve. The fines collected through the sieve were used to make the product (6.0g in creamer pouch). Fines were used to generate a high density creamer and break the gasified spray dried particles. No sweetener was added. The cappuccino was then brewed as in Example 1. In this example the foam was large and stable for in excess of 5 minutes. The extra foam stability was attributed to the lower fat content and foam stabilizing content in the creamer.

### Example 4

The same process was employed as for Example 3 except that 4.0g of sucrose was added to the creamer pouch. Product brew characteristics were the same as for Example 3.

## Claims

1. A method for brewing cappuccino using an electric espresso machine comprising the steps of:
inserting a cappuccino brewing kit comprising a coffee filter pouch (20; 42) which comprises roast and ground coffee (26), and a second filter pouch (10; 44) which comprises creamer (16) therein, and wherein the weight ratio of the creamer content of said creamer filter pouch (10; 44) to the coffee in said coffee filter pouch (20; 42) is from 0.2 to 5.0 into the brewing chamber of an espresso machine with the coffee pouch (20; 42) located above the second pouch (10; 44), and contacting said cappuccino brewing kit with sufficient hot water and/or steam to thereby brew the desired quantity of cappuccino comprising foam using said espresso machine; wherein the espresso machine has an internal pressurising pump.

2. A method according to claim 1, wherein the contacting step comprises running the espresso machine through two or more espresso brewing cycles.

3. A method according to claim 1 or claim 2, wherein the second filter pouch (10; 44) additionally comprises a sweetener, flavor, foam stabilizer or combination thereof.

4. A method according to any preceding claim, wherein the weight ratio of creamer to coffee is from 0.4 to 2.0.

5. A method according to any preceding claim, wherein the coffee filter pouch (20;42) further comprises soluble coffee and wherein the kit contains a weight ratio of from 1.0 to 7.5 creamer to coffee measured as the weight of extractable solids from the roast and ground coffee (26) plus the weight of soluble coffee.

6. A method according to any preceding claim, wherein the cappuccino brewing kit further comprises a means (29; 30) for retaining the coffee pouch (20; 42) and the second pouch (10; 44) in association with one another in a manner whereby the coffee pouch (20; 42) can be positioned above the second pouch (10; 44) when the kit is inserted into the brewing chamber of an espresso machine.

7. A method according to claim 6, wherein the retaining means comprises an attachment means (30) for attaching the coffee pouch (20; 42) to the second pouch (10; 44).

8. A method according to claim 7, wherein the attachment means comprises a heat seal (30) and wherein both the coffee pouch (20; 42) and the second pouch (10: 44) are made up of filter paper.

9. A method according to claim 6, wherein the retaining means comprises a porous bag (29).

10. A method according to any one of claims 1 to 6, wherein the cappuccino brewing kit is a unitary filter pack (40) and a separation between the coffee pouch (42) and the second pouch (44) is provided by a layer of filter paper (46).

11. A method according to any preceding claim wherein after insertion of the cappuccino brewing kit there is void volume in the brewing chamber to enhance the production of foam.

## Patentansprüche

1. Verfahren zum Aufbruhen von Cappuccino unter Verwendung einer elektrischen Espresso-Maschine, das die folgenden Schritte umfaßt:
Einsetzen eines Cappuccino-Brühkits, das einen Kaffeefilterbeutel (20; 42) umfaßt, der gerösteten und gemahlenen Kaffee (26) umfaßt und einen zweiten Filterbeutel (10; 44), der Sahne (16) darin umfaßt und worin das Gewichtsverhältnis des Sahnegehaltes von genanntem Sahnefilterbeutel (10; 44) zu dem Kaffee in genanntem Kaffeefilterbeutel (20; 42) von 0,2 bis 5,0 liegt, in die Brühkammer einer Espresso-Maschine mit dem Kaffeebeutel (20; 42), der sich über dem zweiten Beutel (10; 44) befindet, und Kontaktieren von genanntem Cappuccino-Brühkit mit genügend heißem Wasser und/oder Dampf, um damit unter Verwendung genannter Espresso-Maschine die Schaum umfassende gewünschte Cappuccino-Menge aufzubrühen; worin die Espresso-Maschine eine innere Druckpumpe aufweist.

2. Verfahren nach Anspruch 1, worin der Kontaktierschritt das Laufen der Espresso-Maschine durch zwei oder mehr Espresso-Brühzyklen umfaßt.

3. Verfahren nach Anspruch 1 oder 2, worin der zweite Filterbeutel (10; 44) zusätzlich einen Süßstoff, Geschmacksstoff, Schaumstabilisator oder eine Kombination davon umfaßt.

4. Verfahren nach einem der vorangehenden Ansprüche, worin das Gewichtsverhältnis von Sahne zu Kaffee von 0,4 zu 2,0 beträgt.

5. Verfahren nach einem der vorangehenden Ansprüche, worin der Kaffeefilterbeutel (20; 42) überdies löslichen Kaffee umfaßt und worin das Kit ein Gewichtsverhältnis von 1,0 bis 7,5 Sahne zu Kaffee enthält, der als das Gewicht von extrahierbaren Feststoffen aus dem gerösteten und gemahlenen Kaffee (26) plus dem Gewicht des löslichen Kaffees gemessen wird.

6. Verfahren nach einem der vorangehenden Ansprüche, worin das Cappuccino-Brühkit überdies ein Mittel (29; 30) zum Zurückhalten des Kaffeebeutels (20; 42) und des zweiten Beutels (10; 44) in Verbindung zueinander in einer Weise umfaßt, wobei der Kaffeebeutel (20; 42) über den zweiten Beutel (10; 44) positioniert werden kann, wenn das Kit in die Brühkammer einer Espresso-Maschine eingesetzt wird.

7. Verfahren nach Anspruch 6, worin das Rückhaltemittel ein Befestigungsmittel (30) zum Befestigen des Kaffeebeutels (20; 42) an dem zweiten Beutel (10; 44) umfaßt.

8. Verfahren nach Anspruch 7, worin das Befestigungsmittel ein Heißsiegel (30) umfaßt und worin sowohl der Kaffeebeutel (20; 42) als auch der zweite Beutel (10; 44) aus Filterpapier hergestellt sind.

9. Verfahren nach Anspruch 6, worin das Rückhaltemittel einen porösen Beutel (29) umfaßt.

10. Verfahren nach einem der Ansprüche 1 bis 6, worin das Cappuccino-Brühkit eine Einheitsfilterpackung (40) ist und eine Trennung zwischen dem Kaffeebeutel (42) und dem zweiten Beutel (44) durch eine Filterpapierschicht (46) vorgesehen ist.

11. Verfahren nach einem der vorangehenden Ansprüche, worin nach Einsetzen des Cappuccino-Brühkits ein Hohlraumvolumen in der Brühkammer zur Verbesserung der Schaumbildung vorhanden ist.

## Revendications

1. Une méthode de préparation de cappuccino au moyen d'une machine à express, comportant les étapes suivantes :
introduction d'un kit de préparation de cappuccino comportant un sachet filtrant (20 ; 42) qui contient du café torréfié et moulu (26), et un second sachet filtrant (10 ; 44) qui contient un succédané de lait (16), et dans lequel le rapport en poids entre le contenu en succédané de lait dudit sachet filtrant de succédané de lait (10 ; 44) et le café contenu dans ledit sachet filtrant de café (20 ; 42) est de 0,2 à 5,0, dans la chambre à infuser de la machine à express avec le sachet de café (20 ; 42) placé au-dessus du second sachet (10 ; 44), et mise en contact dudit kit de préparation de cappuccino avec une quantité suffisante d'eau chaude et/ou de vapeur afin de faire infuser la quantité souhaitée de cappuccino comprenant de la mousse en utilisant ladite machine à express, la machine à express ayant une pompe de pressurisation interne.

2. Une méthode selon la revendication 1, selon laquelle l'étape de mise en contact inclut l'utilisation de la machine à express pendant deux cycles d'infusion d'express ou davantage.

3. Une méthode selon la revendication 1 ou la revendication 2, selon laquelle le second sachet filtrant (10 ; 44) contient de plus un édulcorant, un produit aromatique, un stabilisateur de mousse ou une combinaison de ceux-ci.

4. Une méthode selon l'une quelconque des revendications précédentes, selon laquelle le rapport en poids entre le succédané de lait et le café est de 0,4 à 2,0.

5. Une méthode selon l'une quelconque des revendications précédentes, selon laquelle le sachet filtrant de café (20 ; 42) contient de plus du café soluble et selon laquelle le kit contient un rapport en poids de 1,0 à 7,5 de succédané de lait/café mesuré comme le poids des solides extractibles du café torréfié et moulu (26) plus le poids du café soluble.

6. Une méthode selon l'une quelconque des revendications précédentes, selon laquelle le kit de préparation de cappuccino comprend de plus un moyen (29 ; 30) pour retenir le sachet de café (20 ; 42) et le second sachet (10 ; 44) en association l'un avec l'autre de façon telle que le sachet de café (20 ; 42) peut être placé au-dessus du second sachet (10 ; 44) quand le kit est introduit dans la chambre à infuser de la machine à express.

7. Une méthode selon la revendication 6, selon laquelle le moyen de retenue comporte un moyen de fixation (30) pour fixer le sachet de café (20 ; 42) au second sachet (10 ; 44).

8. Une méthode selon la revendication 7, selon laquelle le moyen de fixation comporte un joint thermique (30) et selon laquelle le sachet de café (20 ; 42) ainsi que le second sachet (10 ; 44) sont réalisés en papier filtre.

9. Une méthode selon la revendication 6, selon laquelle le moyen de retenue comporte un sac poreux (29).

10. Une méthode selon l'une quelconque des revendications 1 à 6, selon laquelle le kit de préparation de cappuccino est un ensemble de filtration unitaire (40), et une séparation entre le sachet de café (42) et le second sachet (44) est assurée par une couche de papier filtre (46).

11. Une méthode selon l'une quelonque des revendications précédentes, selon laquelle, après l'introduction du kit de préparation de cappuccino, il existe un volume vide dans la chambre d'infusion pour favoriser la production de mousse.
